# EUROPEAN PATENT APPLICATION

(11) **EP 1 734 021 A2**
(43) Date of publication of application: **20.12.2006**
(21) Application number: 06115478.7
(22) Date of filing: 14.06.2006
(51) Int. Cl.: C04B 35/52

(54) **Expandable/flexible constraint fixture for carbonization of carbon-carbon preforms**

(30) Priority: 14.06.2005 US 690157 P; 18.05.2006 US 435763 P
(71) Applicant: Honeywell International Inc., Morristown, New Jersey 07962 (US)
(72) Inventor: Simpson, Allen H., Buchanan, IN 49107 (US); Fryska, Slawomir T., Granger, IN 46530 (US); LaForest, Mark L., Granger, IN 46530 (US); Soos, Barry P., Mishawaka, IN 46544 (US)
(74) Representative: Haley, Stephen

(57) **Abstract**

Constraint fixture for processing annular preforms. The constraint fixture is made up of a lower plate, a top plate, a ring for the outside diameter of an annular preform being treated within the constraint fixture, and a ring for the inside diameter of the annular preform. The outside diameter and inside diameter rings are made of thin flexible sheet metal strips or thin flexible carbon-carbon composite strip material. The thin flexible strips are joined together by deformable joints, so that the flexible constraint system retains pitch within the fibrous matrix of the preform. The outside diameter strips may be joined together by expandable joints and the inside diameter strips may be joined together by collapsible joints. Also, a method of avoiding damage to an annular fibrous preform, e.g., an aircraft brake disc preform, during a carbonization procedure. This method involves carbonizing the annular fibrous preform in the constraint fixture of the invention.

## Description

This invention relates to the carbonization of pitch-infiltrated fibrous preforms. Such pitch infiltrated fibrous preforms are manufactured into carbon-carbon composites having utility in such demanding applications as aircraft brake discs.

Carbonization is a key step in the preparation of carbon-carbon composite materials. Among the many patents that describe such carbonization are: US 5,439,080, PITCH-REINFORCED CARBON FIBER BRAKE DISC AND PYROLYTIC CARBON/RESIN-REINFORCED CARBON FIBER FRICTION PADS; US 5,750,058, METHOD FOR THE PREPARATION OF HIGH MODULUS CARBON AND GRAPHITE ARTICLES; US 5,871,838, METHOD FOR RAPID FABRICATION OF FIBER PREFORMS AND STRUCTURAL COMPOSITE MATERIALS; and US 6,699,427 B2, MANUFACTURE OF CARBON/CARBON COMPOSITES BY HOT PRESSING.

Carbonization of pitch-infiltrated fibrous preforms during the manufacture of carbon-carbon composites poses many difficulties. Among the difficulties are the phenomena that when the fibrous pitch-infiltrated preform is held in a constraint fixture during a carbonization process, as a result of the high temperatures utilized for carbonization, the pitch may become liquid and move out of the fibrous preform matrix, (1) possibly causing the preform to change shape, and (2) lowering the final density below that which would be achieved if the pitch did not run out of the preform matrix. Also, (3) unequal coefficients of thermal expansion between the preform and an adjacent wall of the constraint fixture may break or stress the preform or may instead break or stress the constraint fixture. US 2005/0093188 A1, entitled BINDERLESS PREFORM MANUFACTURE, provides more details concerning the configuration and use of mold constraint fixtures. The entire contents of published application US 2005/0093188 A1 are expressly incorporated by reference herein.

Rigid constraint fixtures have been employed to solve the liquidity problems noted above. However, rigid constraint fixtures can damage the preform, and the fixtures themselves may deform or break after several heating cycles.

The present invention provides flexible constraint fixtures, The flexible constraint fixtures of this invention bend or flex (rather than break) during the heating cycle. The flexibility of the fixtures avoids placing undue pressure on the outside diameter of the preform caused by mismatches in coefficient of thermal expansion. The fixtures of this invention flex as the preform expands and contracts and yet retains the liquid phase pitch within the preform matrix. Also, lightweight flexible fixtures in accordance with the present invention are normally far less costly than are rigid constrain fixtures.

### In the Drawings;

The present invention will become more fully understood from the detailed description given hereinbelow and the accompanying drawings. The drawings are not to scale, and are given by way of illustration only. Accordingly, the drawings should not be construed as limiting the present invention.

Figure 1 is an exploded perspective view of a mold incorporating a constraint fixture in accordance with the present invention.

Figure 2 is an exploded perspective view of a plurality of preforms stacked and separated by dividers for batch processing.

Figures 3A is a schematic top view of a constraint fixture in accordance with this invention prior to use in a carbonization procedure.

Figures 3B is a schematic top view of a constraint fixture in accordance with this invention subsequent to use in a carbonization procedure.

This invention provides a constraint fixture for processing an annular preform. The constraint fixture of this invention is made up of a lower plate, a top plate, a ring for the outside diameter of an annular preform being treated within the constraint fixture, and a ring for the inside diameter of the annular preform. In accordance with the present invention, the outside diameter and inside diameter rings are made of thin flexible sheet metal strips or thin flexible carbon-carbon composite strip material. In the constraint fixture of this invention, the thin flexible strips are typically joined together by deformable joints, so that the flexible constraint system retains pitch within the fibrous matrix of the preform. However, other approaches to flexibility may alternatively be employed. For instance, the ends of the strips can be arranged to slide over one another as the preform being treated expands. In a variation of this, the strips (walls) can be designed with tongue-and-groove joints. Typically, however, the outside diameter strips are joined together by expandable joints and the inside diameter strips are joined together by collapsible joints.

Another embodiment of the present invention is a method of avoiding damage to an annular fibrous preform, e.g., an aircraft brake disc preform, during a carbonization procedure. This method involves carbonizing the annular fibrous preform in the constraint fixture of the invention.

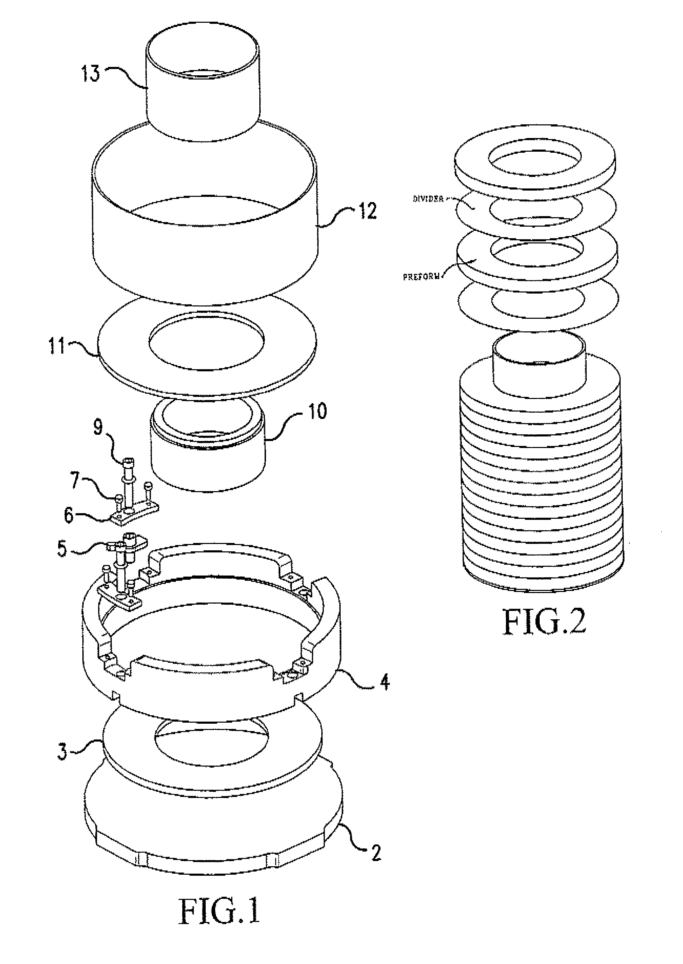

Referring to Figure 1, rigid constraint fixtures which have been employed comprise a rigid bottom plate (2), an ejector base plate (3), a mold outer ring (4), a mold inner ring (10), a top press plate (11), an outer wall (12), and an inner wall (13). These components can be made e.g. of steel alloy ½ inch or more in thickness. The alloy has typically been selected to permit high operating temperatures, which increases cost. Figure 1 also identifies locking cams (5), cam retainer plates (6), retainer bolts (7), and cam locking bolts (9). The manner in which two cam retainer bolts (7) and one cam locking bolt (9) connect each cam retainer plate (6) to a corresponding locking cam (5) can be seen from their relative positions in Figure 1. In this example, the locking cams are turned clockwise to lock the constraint fixture during use, and counterclockwise to unlock. After a preform being manufactured has been subjected to the pressing step, the locking cams (5) are swung down on the top of press plate (11) and are locked in position by locking bolts (9). Alternatively, a ratcheting device (not shown) can be used to automatically lock the press plate into position once the plate is pressed down to achieve the desired compaction or pressure.

Normally, a plurality of preforms is carbonized at the same time together in a carbonization furnace in a batch operation. Figure 2 shows a typical configuration for the batch carbonization of preforms. In Figure 2, a plurality of preforms surround an inner rigid ring and are separated by rigid divider plates located above and below each preform.

In the constraint fixture of this invention, the top and bottom plates may be made of steel alloy or of graphite or of carbon-carbon composite. This is because the plates do not flex and are under very little stress. In this invention, however, the outside diameter and inside diameter rings are made of thin flexible sheet metal strips or thin flexible carbon-carbon composite strip material. Typical thicknesses are ¼inch or less. The components of the flexible constraint fixture of the present invention are not attached to one another. The strips are joined by expandable joints, which enable the flexible constraint system of this invention to retain pitch within the fibrous matrix of the preform. As temperatures change, the OD and ID rings flex to constrain the preform without causing damage.

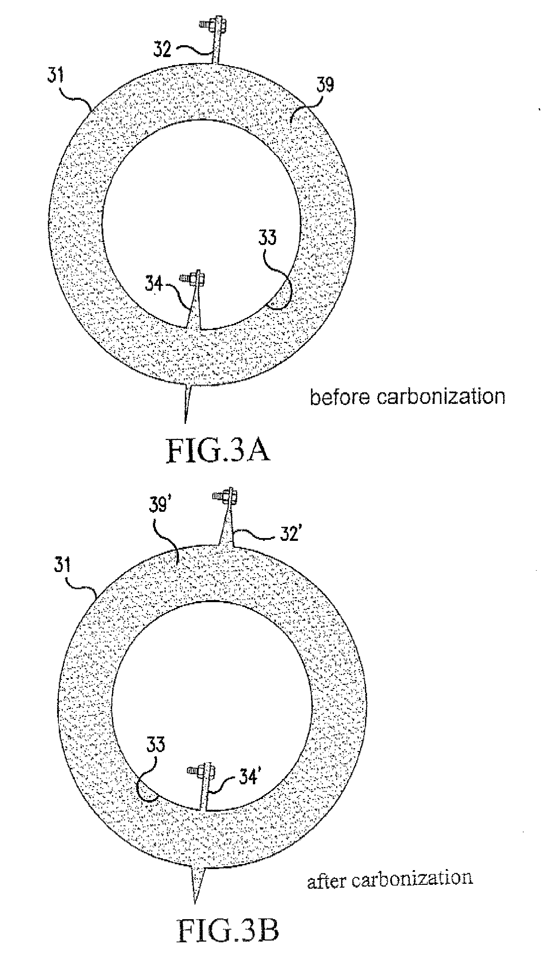

One method of practicing the present invention is illustrated in Figures 3A and 3B. Figure 3A illustrates a preform located in an inventive fixture prior to carbonization. This embodiment of the invention includes providing individual flexible rings around the inside and outside diameters of each preform. The uncarbonized preform (39) is surrounded on its outside diameter by a ring (31) that includes one or more expandable joints (32). The uncarbonized preform is bounded on its inside diameter by a ring (33) that includes one or more collapsible joints (34). One method of providing joints (32, 34) is simply to bend the material forming the rings approximately 90° and then joining two such ends together with nuts and bolts (for instance, ¼" bolts 1 "in length with ¼" nus). The height of the material will normally be equal to the thickness of the preform being carbonized. As illustrated in Figure 3B, after processing carbonized preform (39') is surrounded on its outside diameter by ring (31) that includes one or more expanded joints (32') and is bounded on its inside diameter by a ring (33) that includes one or more collapsed joints (34'). The collapsing of joint(s) 34 and the expansion of joint(s) 32 serves to protect the preform from damage due to thermal expansion differentials between the composite material being carbonized and the metallic molding fixtures.

In this embodiment, divider plates similar to those illustrated in Figure 2 would have a larger outside diameter than the outer flexible ring, to allow simultaneous carbonization of preforms of different dimensions. In addition, this approach avoids the possibility that adjacent discs may bond together due to liquid pitch running between the separator plates and the fixture walls.

To carbonize the pitch infiltrated preform, a graphite disc, with an outside diameter larger than the preform to be carbonized, is laid horizontally on the hearth plate of a carbonization furnace. The preform is then wrapped on its outside diameter with formed sheet metal the same height as the preform is thick. The inside diameter of the preform is also equipped with a strip of sheet metal the same height. The metal on the inside is formed so that the joint can crush if necessary. The joints on the metal on the outside diameter of the preform are designed to allow them to expand if needed without exerting great force on the preform. With the inside and outside diameter metal strips in place, the preform is then carbonized to a temperature of at least 600°C. W hen cooled, the metal strips may be easily removed from the inside diameter and outside diameter of the preform. The metal will typically be deformed and may be discarded. If it is not too badly deformed, however, the metal may be bent back into the desired shape and reused.

The materials used for the separator plates may be graphite or steel or high temperature composite. They will typically range from 1/8 inch to 3/8 inch in thickness in the case of steel and from ½ to 1 inch in thickness in the case of graphite or composite. The flexible portions may be made of sheet metal or of thin carbon-carbon composite material. These will typically be very thin, approximately 0.1 inch in the case of steel and ¼inch in the case of composite. In many cases, these flexible members will be discarded after a single use. In an alternative embodiment, the entire constraint fixture may be made of carbon-carbon composite material or graphite or other high temperature materials. This will permit a single step process wherein the preforms are both carbonized and heat treated without removal from the constraint fixture.

In a preferred embodiment of the present invention, the inside and outside diameter rings are made of steel approximately 0.1 inch in thickness. Ideally, the steel will be low cost, and so suitable for use in a single carbonization cycle.

The present invention has been described herein in terms of preferred embodiments. However, obvious modifications and additions to the invention will become apparent to those skilled in the relevant arts upon a reading and understanding of the foregoing description. It is intended that all such modifications and additions form a part of the present invention to the extent that they fall within the scope of the several claims appended hereto.

## Claims

1. A constraint fixture for an annular preform comprising:
a lower plate;
a top plate;
a ring for the outside diameter of an annular preform being treated within the constraint fixture; and
a ring for the inside diameter of the annular preform,
wherein the outside diameter and inside diameter rings are made of thin flexible sheet metal strips or thin flexible carbon-carbon composite strip material.

2. The constraint fixture of claim 1, wherein the strips are joined together by deformable joints, such that the flexible constraint system retains pitch within the fibrous matrix of the preform.

3. The constraint fixture of claim 2, wherein the outside diameter strips are joined together by expandable joints and the inside diameter strips are joined together by collapsible joints.

4. The constraint fixture of claim 1, wherein the outside diameter and inside diameter rings are made of 0.1-inch-thick steel.

5. The constraint fixture of claim 1, wherein the outside diameter and inside diameter rings are made of ¼inch-thick carbon-carbon composite material.

6. A method of avoiding damage to an aircraft brake disc preform during a carbonization procedure which comprises carbonizing said preform in the constraint fixture of claim 1.
